# EUROPEAN PATENT SPECIFICATION

(11) **EP 1 894 863 B1**
(45) Date of publication and mention of the grant of the patent: **16.02.2011**
(21) Application number: 07115520.4
(22) Date of filing: 03.09.2007
(51) Int. Cl.: B65G 47/32, B65G 47/66

(54) **Dosing apparatus**
Dosiervorrichtung
Appareil de dosage

(30) Priority: 01.09.2006 EP 06018368
(43) Date of publication of application: 05.03.2008
(73) Proprietor: FPS Food Processing Systems B.V., 2631 RE Nootdorp (NL)
(72) Inventor: van den Hazel, Brand, 3882 VE Putten (NL)
(74) Representative: Hatzmann, Martin

(56) References cited:
- DE-A1- 1 481 370
- US-A- 2 296 645
- US-A- 2 618 306
- US-A- 3 024 889
- US-A- 3 722 173
- US-A- 4 775 051

## Description

The present invention relates to an apparatus for dosing substantially round products, for instance eggs, on a roller conveyor, according to the preamble of claim 1.

Such an apparatus is known from, for instance, EP823208. In this publication, a feed system for eggs coming directly from poultry houses is described. It is noted how eggs are fed randomly on a generally flat belt of an endless conveyor while, thereupon, the stream of eggs is transformed by a system of conduits or channels into an ordered stream consisting of rows of eggs rolling along one behind the other. After this, the eggs from each row are supplied, one by one, to an endless roller conveyor very commonly used and known in this field of technology, while no further auxiliary means are used and wherein the eggs rolling along end up, one by one, between and on two successive rollers of a row. DE 1,481,370 discloses a device for dosing rollable objects, in particular eggs according to the preamble of claim 1. The above description of EP 823,208 is to a large extent applicable to DE'3 70 as well. The latter publication, however, additionally describes transferring devices ("Zellenräder") that discretely transfer individual eggs from the ordered streams of eggs onto the endless roller conveyor.

In particular where food products are concerned, efforts are more and more directed towards more hygienic treatment and processing. Although this is hardly, if at all, implemented in poultry houses, the sorting systems have already been made suitable thereto in many parts and aspects. From EP1094700 for instance, it is known to guide products, such as eggs, on a particular part of the conveying path in a manner such that they each have their own pair of rollers with, typically, a conveying position between the two rollers of such a pair. In order to realize this situation of separate pairs, a system is constructed wherein, upon unwinding of a chain, simultaneously, an additional pair of supporting rollers is introduced between the already present rollers, thereby forming the pairs mentioned. In such a system, the eggs are fed to this conveyor in the manner as described hereinabove.

The above-described apparatus occupy much space, are highly complex, and can cause wear and, thus, lead to replacement of and repairs to many parts.

In order to prevent the above-mentioned problems, the invention provides an apparatus for dosing substantially round products, for instance eggs, on an endless roller conveyor, comprising
- a feed belt for supplying the products located thereon in a conveying direction T,
- a dosing apparatus for ordering, further down the conveying direction T, the products supplied via the feed belt,
- an endless roller conveyor, comprising axles in transverse direction at mutually fixed intervals, having, on the axles, at fixed intervals, at least two side-by-side rollers, while the rollers located one behind the other in the conveying direction form at least two rows, and spaces between pairs of rollers located one behind the other form a conveying location, wherein the products are each located on a pair of rollers of such a row, and
- a control device for controlling and mutually gearing the speeds of the feed belt, of the dosing apparatus, and of the roller conveyor to one another, the apparatus being characterized in that with a given number of conveying locations, the roller conveyor comprises twice the number of rollers, while, for each product, a corresponding, separate pair of rollers is comprised, so that each roller is never in contact with more than one product at the same time.

Thus, in a suitable manner, the entire set up of such a sorting apparatus is considerably simplified. What is more, the careful maintaining and cleaning of such an apparatus becomes much simpler, which is highly beneficial to hygiene.

In a further elaboration, the apparatus is characterized in that the rollers on the endless roller conveyor have successive center-to-center distances a, b, a, b, a, with a ≥ b, while the pitch distance of the conveying locations is equal to the distance [a + b].

What is achieved in this manner is that due to such a choice of the pitch distances, the size of the sorting apparatus can be advantageously chosen, while, if a = b were to occur, that part of the roller conveyor would be prevented from, accordingly, having to become twice as long.

In further elaborations, the apparatus can be characterized in that: the dosing apparatus comprises at least a single endless advancing conveyor with an axle transverse to the conveying direction T; and/or the advancing conveyor comprises an advancing guide that takes up a fixed position relative to remaining moving parts; and/or the guide is a guide block or guide plate in the direction and path of a row; the advancing conveyor is a conveyor mill with a mill axle perpendicular to the direction T; and/or
the conveying mill comprises rods, as advancing elements for the said products, with the rods extending over the width of the conveyors; and/or the conveying mill comprises strings, as advancing elements for the said products, with the strings extending over the width of the conveyors; and/or the conveying mill comprises recesses in a substantially cylindrical circumferential surface, with the circumferential surface extending over the width of the conveyors, while the recesses are located in the prolongation of the rows and form conveying locations during transfer of the products between the two conveyors; and/or
the dosing apparatus comprises a star wheel, with star radius ends as advancing elements, which extends over the width of said conveyors; and/or the dosing apparatus includes successively in the conveying direction T, a positioning device for accurately positioning the products to pitch, and a placing device for transferring the products to the separate pairs of rollers; and/or
the positioning device and the placing device are mills with their mill axle transversely to the direction T; and/or
the positioning device or positioning mill comprises rods, as advancing elements from the feed conveyor for the products, with the rods extending over the width of the conveyors, while the eggs are positioned at a well-defined first pitch distance; and/or
the placing device or placing mill comprises placing units, as advancing elements from the positioning mill for the products, with the placing units extending over the width of the conveyors, while the eggs are positioned at a well-defined second pitch distance, the second pitch distance being greater than the first, while the second pitch distance is substantially equal to the pitch distance between the conveying locations on the roller conveyor; and/or the placing units comprise strip-shaped devices extending over the width of the conveyors; and/or
the strip-shaped devices form a substantially flat face, while these faces are arranged at a well defined angle to center lines through the mill axle; and/or between the two conveyors and below at least a single conveying mill, a support guide plate is provided that extends over at least the width of the two conveyors; and/or
the rollers are hourglass shaped; and/or
all rollers are provided on continuous axles; and/or
half of the rollers are provided on continuous axles and that the other half of the rollers each have a separate axle, wherein these latter rollers are provided between rollers arranged on continuous axles.

In the exemplary embodiments as indicated hereinabove, endless conveyors with advancing elements are suitably selected, in particular with conveyors having, viewed from their axle, conveyors having everywhere the same distance to such an axle, while advantageously, gradually changing displacements and movements can be obtained.

Such apparatus show much similarity to the apparatus according to US4775051. In this publication, the eggs are transferred from a first roller conveyor onto a second roller conveyor with the aid of an intermediate conveyor or intermediate mill, while during this intermediate path, further operations such as weighing and removing products can be carried out. However, two essential features are lacking as a result of which this apparatus is completely unsuitable, on the one side, for transfer of, for instance, eggs directly from the poultry houses and, on the other hand, for a roller conveyor designed for hygienic treatment, i.e. at the feed supplying side large quantities of products, such as eggs, randomly and rapidly on flat feed belts and having at the discharge side the roller conveyor with the so-called double rollers.

In yet another elaboration of the present invention, the apparatus is characterized in that the dosing apparatus comprises a robot. In particular with a width of only a few rows, a robot, for instance a robot of the delta type, gives a further advantageous simplification of an overall sorting and conveying system as elucidated hereinabove.

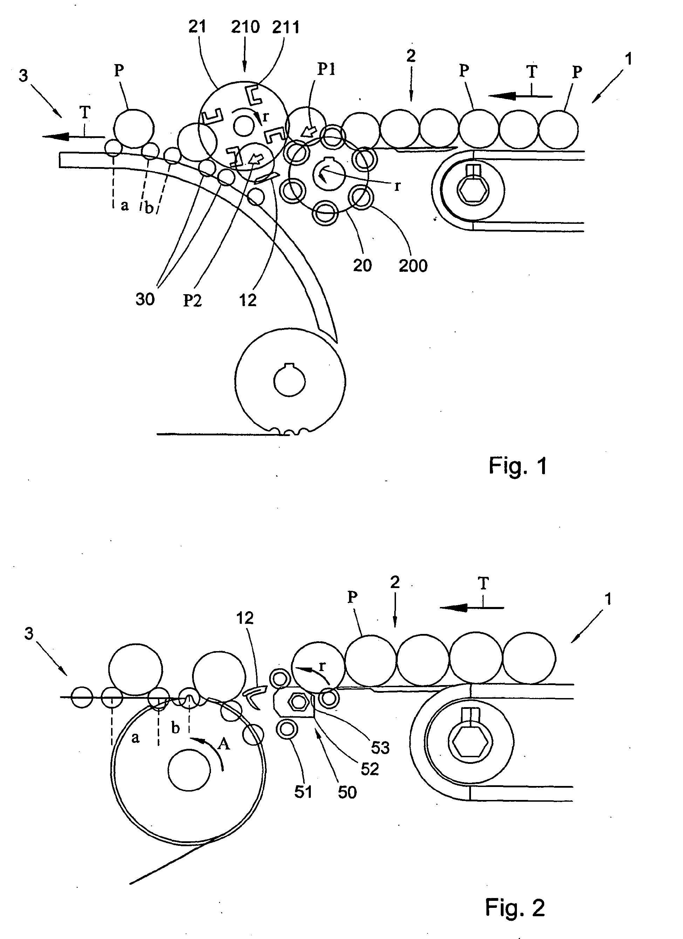

Further details and features will be elucidated with reference to a drawing,
wherein Fig. 1 gives a schematic side view of a first exemplary embodiment of the apparatus according to the present invention, and
wherein Fig. 2 gives a schematic side view of a second exemplary embodiment.

In both Figures, the same parts are indicated by the same numerals.

In Fig. 1, a schematic side view is shown of a flat feed conveyor 1, a downstream end part thereof that forms a dosing apparatus 2, and a roller conveyor 3 with which the products P are guided along. With the feed conveyor 1 as well as the roller conveyor 3, the conveying direction T is indicated. The part of the dosing apparatus 2 can be designed as described in EP823208, wherein separating strips form channels for dividing the overall stream of supplied eggs into substreams. Such separating devices are not indicated in detail in the Figure. Further, vertical separating plates or, also, other elements such as steel wires or somewhat flexible wires can ensure separate substreams. In particular at the location of the part of the dosing apparatus 2 the products will form rows of successive products. In case of eggs, this means that the view shows the rounded side or the point of such an egg.

The roller conveyor comprises rollers 30, with, alternately, mutual center-to-center distances a and b wherein, as indicated, products P are situated on conveying locations at the location of rollers 30 with interval a. The pitch distance of the conveying locations therefor becomes [a + b]. As a rule, in this field of technology, these rollers 30 are generally hourglass-shaped and chosen from suitable plastic material. However, other forms and compositions can be chosen for such rollers 30 too. For instance rod axles, provided with, for instance, a suitable covering and further equipped with separating elements between the rows as support conveyor elements.

In order to transfer the products P from the feed conveyor onto the roller conveyor with the so-called double rollers thereon, in this exemplary embodiment, a combination is chosen of two successive mill elements, a first mill, i.e. a positioning mill 20 rotating about a mill axle (transverse to T) in direction r, with which, for the aligned products P, an intermediate distance is obtained during their movement according to p1. With a second mill, a placing mill 21, which rotates about a mill axle (transverse to T) in direction R, the products are taken, with further enlarged intermediate distances, to the proper position above the correct pair of rollers 30 and transferred thereto while proceeding according to p2.

In this exemplary embodiment, the positioning mill 20 comprises rods 200, with this mill extending over the entire width of the conveyors mentioned. It will be clear to any skilled person that further configurations are possible. Elaborations as shown and described in US4775051, including star wheel configurations existing of, for instance, one single piece of material may be considered.

In the exemplary embodiment shown, the placing mill 21 comprises strip-shaped placing units 210, composed of, for instance, parallel brackets extending transversely to T, also over the width of the conveyors, or in another manner as already mentioned hereinabove. It is further indicated in the Figure that these brackets 211 are at a certain angle to a radius line of this mill to thus realize an advantageous advancing effect.

Further, a support guide plate 12 is used for guiding the products over a shortest possible distance to their proper conveying location. Further elaborations thereof can, once more, correspond to those shown in, for instance, US4775051.

Fig. 2 shows a similar view as shown in Fig. 1, wherein products P are supplied by a single conveying mill 50 from a feed conveyor 1 to a roller conveyor 3, as already described hereinabove and designed with twice the number of rollers.

Once again, this roller conveyor 3 has pitch distances a and b, with a total of [a + b], and is driven by a drive wheel according to a direction of rotation A.

According to the exemplary embodiment shown, the conveying mill 50 comprises three rollers 51 which are uniformly distributed over the circumference. Relative to the conveyor mill 50 rotating in the direction r, a guide plate 52 is fixedly mounted in the path and line with a row of such products P to be conveyed, with, in particular, a bevel 53 for this guide plate 52, which results, upon conveyance of the products P, in a gradually proceeding movement of these products. In this exemplary embodiment too, a support guide plate 12 is used.

It will be clear to any skilled person that variants in this set up can be utilized, for instance the rollers 51 being free-running or not being free-running, as guide, instead of a guide plate 52, a block of thicker design or also, several guide plates thus forming a comb, and for the bevel 53 specific choices can be made too, for instance specially sized curvatures.

It will be clear to the skilled person that in this field of technology, small further variants are possible. These are understood to be included in the scope of protection of the appended claims.

## Claims

1. An apparatus for dosing substantially round products (P), for instance eggs, on an endless roller conveyor (3), comprising:
- a feed belt (1) for supplying the products located thereon in a conveying direction T,
- a dosing apparatus (2) for ordering, further down the conveying direction T, the products supplied via the feed belt,
- an endless roller conveyor (3), comprising axles in the transverse direction at mutually fixed intervals, having, on the axles, at fixed intervals, at least two side-by-side rollers (30), while the rollers located one behind the other in the conveying direction form at least two rows, and spaces between pairs of rollers located one behind the other form a conveying location, wherein the products are each located on a pair of rollers of such a row, and
- a control device for controlling and mutually gearing the speeds of the feed belt (1), of the dosing apparatus (2), and of the roller conveyor (3) to one another,
**characterized in that** with a given number of conveying locations, the roller conveyor comprises twice the number of rollers (30), while, for each product (P), a corresponding, separate pair of rollers is comprised, so that each roller is never in contact with more than one product at the time.

2. An apparatus according to claim 1, **characterized in that** the rollers (30) on the said endless roller conveyor (3) have successive center-to-center distances ... a, b, a, b, a..., with a ≥ b, while the pitch distance of the conveying locations is equal to the distance [a + b].

3. An apparatus according to claim 1, **characterized in that** the dosing apparatus (2) comprises at least a single endless advancing conveyor (20, 21, 50) with an axle transverse to the conveying direction T.

4. An apparatus according to claim 3, **characterized in that** the advancing conveyor is a conveying mill (20, 21, 50) with a mill axle perpendicular to said direction T.

5. An apparatus according to claim 4, **characterized in that** the advancing conveyor comprises an advancing guide (12, 52) which takes up a fixed position relative to remaining moving parts.

6. An apparatus according to claim 5, **characterized in that** the guide is a guide block or a guide plate (12, 52) in the direction and path of a row.

7. An apparatus according to claim 4, **characterized in that** the conveyor mill comprises rods (200, 51), as advancing elements for the said products (P), wherein the rods extend over the width of the said conveyors.

8. An apparatus according to claim 4, **characterized in that** the conveying mill comprises strings, as advancing elements for said products (P), wherein the strings extend over the width of the said conveyors.

9. An apparatus according to claim 4, **characterized in that** the conveyor mill (20, 21, 50) comprises recesses in a substantially cylindrical circumferential surface, wherein the circumferential surface extends over the width of the said conveyors, wherein the recesses are located in line with the said rows and form conveyor locations during transfer of the products (P) during the two said conveyors.

10. An apparatus according to claim 1, **characterized in that** the dosing apparatus (2) comprises a star wheel, with star radius ends as advancing elements, extending over the width of the said conveyors.

11. An apparatus according to claim 1, **characterized in that** the dosing apparatus (2) includes successively in the conveying direction T a positioning device (20) for accurately positioning the products (P) to pitch, and a placing device (21) for transferring the products to said separate pairs of rollers (30).

12. An apparatus according to claim 11, **characterized in that** the positioning device (20) and the placing device (21) are mills with their mill axles transverse to the said direction T.

13. An apparatus according to claim 12, **characterized in that** the positioning device or positioning mill (20) comprises rods (200), as advancing elements from the feed conveyor (1) for the said products (P), wherein the rods extend over the width of the said conveyors, wherein the eggs are positioned at a well-defined first pitch distance.

14. An apparatus according to claim 12, **characterized in that** the placing device or placing mill (21) comprises placing units (210), as advancing elements from the positioning mill for the said products (P), wherein the placing units extend over the width of the said conveyors, wherein the eggs are positioned at a well-defined second pitch distance, wherein the second pitch distance is greater than the first one, and wherein the second pitch distance is substantially equal to the pitch distance (a+b) between the conveying locations on the roller conveyor (3).

15. An apparatus according to claim 14, **characterized in that** the placing units (210) comprise strip-shaped devices (211) extending over the width of the said conveyors.

16. An apparatus according to claim 15, **characterized in that** the strip-shaped devices form a substantially flat face, while these faces are arranged at a well-defined angle to center lines through the mill axle.

17. An apparatus according to any one of claims 2 - 16, **characterized in that** between the two said conveyors (1, 3), and below at least one single conveyor mill (20, 21, 50), a support guide plate (12, 52) is arranged which extends over at least the width of the two said conveyors.

18. An apparatus according to claim 1, **characterized in that** the dosing apparatus (2) comprises a robot.

19. An apparatus according to any one of the preceding claims, **characterized in that** the rollers (30, 200, 51) are hourglass-shaped.

20. An apparatus according to any one of the preceding claims, **characterized in that** all rollers (30, 200, 51) are provided on continuous axles.

21. An apparatus according to any one of the preceding claims, **characterized in that** half of the rollers are provided on continuous axles, and that the other half of the rollers each have a separate axle, wherein these latter rollers, considered in the conveying direction, are provided between the said rollers as arranged on continuous axles.

## Patentansprüche

1. Vorrichtung zur dosierten Überführung im Wesentlichen runder Produkte (P), beispielsweise Eier, auf einen endlosen Rollenförderer (3), mit folgenden Merkmalen:
- ein Zuführband (1) zur Zuführung der darauf angeordneten Produkte in einer Förderrichtung T,
- eine Dosiereinrichtung (2) zur geordneten Aufnahme der über das Zuführband herangeführten Produkte an einer weiter stromabwärts in der Förderrichtung T gelegenen Stelle,
- einen endlosen Rollenförderer (3), der in festen gegenseitigen Abständen in Querrichtung gelegene Achsen und auf den Achsen in festen Abständen mindestens zwei Seite an Seite gelegenen Rollen (30) umfasst, wobei die in der Förderrichtung hintereinander gelegenen Rollen mindestens zwei Reihen und Abstände zwischen den hintereinander gelegenen Rollenpaaren eine Förderstelle bilden und wobei die Produkte jeweils auf einem Rollenpaar einer solchen Reihe angeordnet sind,
- und eine Steuereinrichtung durch Steuerung und zur gegenseitigen Einregelung der Geschwindigkeiten des Zuführbandes (1), der Dosiereinrichtung (2) und des Rollenförderers (3),
**dadurch gekennzeichnet,**
**dass** bei einer gegebenen Anzahl von Förderstellen der Rollenförderer die doppelte Zahl von Rollen (30) umfasst, wobei für jedes Produkt (P) ein entsprechendes separates Rollenpaar vorhanden ist, so dass jede Rolle nie mit mehr als einem Produkt zugleich in Kontakt ist.

2. Vorrichtung nach Anspruch 1, **dadurch gekennzeichnet, dass** die Rollen (30) des endlosen Rollenförderers (3) aufeinanderfolgende Abstände Mitte-bis-Mitte ... a,b,a,b,a ... , mit a ≥ b aufweisen, während der Teilungsabstand der Förderstellen dem Abstand [a+b] entspricht.

3. Vorrichtung nach Anspruch 1, **dadurch gekennzeichnet, dass** die Dosiereinrichtung (2) mindestens einen endlosen vorwärtsbewegenden Förderer (20, 21, 50) mit einer quer zur Förderrichtung T sich erstreckenden Achse umfasst.

4. Vorrichtung nach Anspruch 3, **dadurch gekennzeichnet, dass** der vorwärtsbewegende Förderer eine Fördertrommel (20, 21, 50) mit einer zu der besagten Richtung T senkrechten Trommelachse umfasst.

5. Vorrichtung nach Anspruch 4, **dadurch gekennzeichnet, dass** der vorwärtsbewegende Förderer eine vorwärtsbewegende Führung (12,52) umfasst, die eine relativ zu den übrigen beweglichen Teilen feste Position einnimmt.

6. Vorrichtung nach Anspruch 5, **dadurch gekennzeichnet, dass** die Führung ein Frührungsblock oder eine Führungsplatte (12, 52) in der Richtung und im Weg einer Reihe ist.

7. Vorrichtung nach Anspruch 4, **dadurch gekennzeichnet, dass** die Fördertrommel-Stangen (200, 51) als vorwärtsbewegende Elemente für die besagten Produkte (P) umfasst, wobei die Stangen sich über die Breite der Förderer erstrecken.

8. Vorrichtung nach Anspruch 4, **dadurch gekennzeichnet, dass** die Fördertrommel Stränge als Vortriebselemente für die besagten Produkte (P) umfasst, wobei die Stränge sich über die Breite der Förderer erstrecken.

9. Vorrichtung nach Anspruch 4, **dadurch gekennzeichnet, dass** die Fördertrommel (20, 21, 50) Vertiefungen in einer im Wesentlichen zyündrischen Umfangsfläche umfasst, wobei die Umfangsfläche sich über die Breite der Förderer erstreckt und wobei die Vertiefungen in einer Linie mit den Reihen angeordnet sind und Förderstellen während des Transfers der Produkte (P) zwischen den beiden Förderern bilden.

10. Vorrichtung nach Anspruch 1, **dadurch gekennzeichnet, dass** die Dosiereinrichtung (2) ein Sternrad umfasst, wobei die Sternradiusenden als vorwärtsbewegende Elemente dienen und sich über die Breite der Förderer erstrecken.

11. Vorrichtung nach Anspruch 1, **dadurch gekennzeichnet, dass** die Dosiereinrichtung (2) in der Förderrichtung T eine Positioniervorrichtung (20) zur genauern Positionierung der Produkte (P) entsprechend der Teilung umfasst sowie eine Übergabeeinrichtung (21) zur Übergabe der Produkte an die separaten Rollenpaare (30) aufweist.

12. Vorrichtung nach Anspruch 11, **dadurch gekennzeichnet, dass** die Positioniervorrichtung (20) und die Übergabevorrichtung (21) Trommeln sind, deren Trommelachsen quer zur Richtung T angeordnet sind.

13. Vorrichtung nach Anspruch 12, **dadurch gekennzeichnet, dass** die Positioniervorrichtung oder Positioniertrommel (20) Stangen (200) für die Produkte (P) als von dem Zuführförderer (1) vorwärtsbewegende Elemente zum Vortrieb umfasst, wobei sich die Stangen über die Breite der Förderer erstrecken auf denen die Eier in einem wohl definierten ersten Teilungsabstand positioniert sind.

14. Vorrichtung nach Anspruch 12, **dadurch gekennzeichnet, dass** die Übergabevorrichtung oder Übergabetromrnel (21) Übergabeeinheiten (210) für die Produkte (P) als von der Positioniertrommel vorwärtsbewegende Elemente von der Positioniertrommel umfasst, wobei die Übergabeeinheiten sich über die Breite der Förderer erstrecken, wobei die Eier in einem wohl definierten zweiten Teilungsabstand positioniert sind, wobei der zweite Teilungsabstand größer als der erste ist und wobei der zweite Teilungsabstand im Wesentlichen gleich dem Teilungsabstand (a+b) zwischen den Förderstellen auf dem Rollenförderer (3) ist.

15. Vorrichtung nach Anspruch 14, **dadurch gekennzeichnet, dass** die Übergabeeinheiten (210) streifenförmige Elemente (211) umfassen, die sich über die Breite der Förderer erstrecken.

16. Vorrichtung nach Anspruch 15, **dadurch gekennzeichnet, dass** die streifenförmigen Elemente eine im Wesentlichen ebene Fläche bilden, die in einem wohldefinierten Winkel zu Mittellinien durch die Trommelachse angeordnet ist.

17. Verfahren nach einem der Ansprüche 2 bis 26, **dadurch gekennzeichnet, dass** zwischen den beiden Förderern (1, 3) und unterhalb mindestens einer Fördertrommel (20, 21, 50) eine Tragführungsplatte (12, 52) angeordnet ist, die sich über mindestens die Breite der beiden Förderer erstreckt.

18. Vorrichtung nach Anspruch 1, **dadurch gekennzeichnet, dass** die Dosiereinrichtung (2) einen Roboter umfasst.

19. Vorrichtung nach einem der vorangehenden Ansprüche, **dadurch gekennzeichnet, dass** die Rollen (30, 200, 51) stundenglasförmig ausgebildet sind.

20. Vorrichtung nach einem der vorangehenden Ansprüche, **dadurch gekennzeichnet, dass** alle Rollen (30, 200, 51) auf durchgehenden Achsen angeordnet sind.

21. Vorrichtung nach einem der vorangehenden Ansprüche, **dadurch gekennzeichnet, dass** die Hälfte der Rollen auf durchgehenden Achsen angeordnet sind und die andere Hälfte der Rollen jeweils eine separate Achse haben, wobei diese letzteren Rollen, in der Förderrichtung gesehen, zwischen den Rollen auf den durchgehenden Achsen angeordnet sind.

## Revendications

1. Appareil pour doser des produits sensiblement ronds (P), par exemple des oeufs, sur un transporteur à rouleaux sans fin (3), comprenant :
- une courroie d'alimentation (1) pour acheminer les produits placés sur celle-ci dans un sens de transport T,
- un appareil de dosage (2) pour ordonner, plus loin dans le sens de transport T, les produits acheminés via la courroie d'alimentation,
- un transporteur à rouleaux sans fin (3), comprenant des axes dans la direction transversale à intervalles fixes entre eux, ayant, sur les axes, à intervalles fixes, au moins deux rouleaux côte-à-côte (30), tandis que les rouleaux placés l'un derrière l'autre dans le sens de transport forment au moins deux rangées et des espaces entre les paires de rouleaux placées l'une derrière l'autre forment un emplacement de transport, dans lequel les produits sont chacun placés sur une paire de rouleaux de cette rangée, et
- un dispositif de commande pour commander et embrayer mutuellement les vitesses de la courroie d'alimentation (1) de l'appareil de dosage (2) et du transporteur à rouleaux (3) l'une sur l'autre,
**caractérisé en ce qu'**avec un nombre donné d'emplacements de transport, le transporteur à rouleaux comprend deux fois le nombre de rouleaux (30), tandis que, pour chaque produit (P), une paire séparée de rouleaux correspondante est constituée, de sorte que chaque rouleau ne soit jamais en contact avec plus d'un produit à la fois.

2. Appareil selon la revendication 1, **caractérisé en ce que** les rouleaux (30) sur ledit transporteur à rouleaux sans fin (8) ont des distances successives de centre à entre ... a, b, a, b, a..., avec a ≥ b, tandis que la distance de pas des emplacements de transport est égale à la distance [a + b].

3. Appareil selon la revendication 1, **caractérisé en ce que** l'appareil de dosage (2) comprend au moins un seul transporteur d'avancement sans fin (20, 21, 50) avec un axe transversal à la direction de transport T.

4. Appareil selon la revendication 3, **caractérisé en ce que** le transporteur d'avancement est une molette de transport (20, 21, 50) dont l'axe est perpendiculaire à ladite direction T.

5. Appareil selon la revendication 4, **caractérisé en ce que** le transporteur d'avancement comprend un guide d'avancement (12, 52) qui assume une position fixe par rapport aux parties mobiles restantes.

6. Appareil selon la revendication 5, **caractérisé en ce que** le guide est un bloc de guidage ou une plaque de guidage (12, 52) dans la direction et le trajet d'une rangée.

7. Appareil selon la revendication 4, **caractérisé en ce que** la molette de transport comprend des tiges (200, 51) comme éléments d'avancement pour lesdits produits (P), dans lequel les tiges s'étendent sur la largeur desdits transporteurs.

8. Appareil selon la revendication 4, **caractérisé en ce que** la molette de transport comprend des fils comme éléments d'avancement pour lesdits produits (P), dans lequel les fils s'étendent sur la largeur desdits transporteurs.

9. Appareil selon la revendication 4, **caractérisé en ce que** la molette de transport (20, 21, 50) comprend des évidements dans une surface circonférentielle sensiblement cylindrique, dans lequel la surface circonférentielle s'étend sur la largeur desdits transporteurs, dans lequel les évidements sont ménagés en ligne avec lesdites rangées et forment des emplacements de transport pendant le transfert des produits (P) entre lesdits deux transporteurs.

10. Appareil selon la revendication 1, **caractérisé en ce que** l'appareil de dosage (2) comprend une roue en étoile, avec les extrémités des rayons de l'étoile comme éléments d'avancement, s'étendant sur la largeur desdits transporteurs.

11. Appareil selon la revendication 1, **caractérisé en ce que** l'appareil de dosage (2) comprend successivement dans le sens de transport T un dispositif de positionnement (20) pour positionner avec précision les produits (P) à un pas et un dispositif de placement (21) pour transférer les produits auxdites paires séparées de rouleaux (30).

12. Appareil selon la revendication 11, **caractérisé en ce que** le dispositif de positionnement (20) et le dispositif de placement (21) sont des molettes dont les axes sont transversaux à ladite direction T.

13. Appareil selon la revendication 12, **caractérisé en ce que** le dispositif de positionnement ou le molette de positionnement (20) comprend des tiges (200) comme éléments d'avancement issus du transporteur d'alimentation (1) pour lesdits produits (P), dans lequel les tiges s'étendent sur la largeur desdits transporteurs et dans lequel les oeufs sont positionnés à une première distance de pas bien définie.

14. Appareil selon la revendication 12, **caractérisé en ce que** le dispositif de placement ou la molette de placement (21) comprend des unités de placement (210) comme éléments d'avancement de la molette de positionnement pour lesdits produits (P), dans lequel les unités de placement s'étendent sur la largeur desdits transporteurs, dans lequel les oeufs sont positionnés à une seconde distance de pas bien définie, dans lequel la seconde distance de pas est supérieure à la première et dans lequel la seconde distance de pas est sensiblement égale à la distance de pas (a+b) entre les emplacements de transport sur le transporteur à rouleaux (3).

15. Appareil selon la revendication 14, **caractérisé en ce que** les unités de placement (210) comprennent des dispositifs en forme de bandes (211) s'étendant sur la largeur desdits transporteurs.

16. Appareil selon la revendication 15, **caractérisé en ce que** les dispositifs en forme de bandes forment une face sensiblement plate, tandis que ces faces sont aménagées sous un angle bien défini par rapport aux lignes centrales passant par l'axe de la molette.

17. Appareil selon l'une quelconque des revendications 2 à 16, **caractérisé en ce que**, entre lesdits deux transporteurs (1, 3), et en dessous d'au moins une seule molette de transport (20, 21, 50), est aménagée une plaque de guidage de support (12, 52) qui s'étend sur au moins la largeur desdits deux transporteurs.

18. Appareil selon la revendication. 1, **caractérisé en ce que** l'appareil de dosage (2) comprend un robot.

19. Appareil selon l'une quelconque des revendications précédentes, **caractérisé en ce que** les rouleaux (30, 500, 51) sont en forme de sablier.

20. Appareil selon l'une quelconque des revendications précédentes, **caractérisé en ce que** tous les rouleaux (30, 200, 51) sont aménagés sur des axes continus.

21. Appareil selon l'une quelconque des revendications précédentes, **caractérisé en ce que** la moitié des rouleaux sont aménagés sur des axes continus et **en ce que** l'autre moitié des rouleaux ont chacun un axe séparé, dans lequel ces derniers rouleaux, considérés dans le sens de transport, sont aménagés entre lesdits rouleaux sur des axes continus.
